# EUROPÄISCHE PATENTSCHRIFT

(11) **EP 2 236 473 B1**
(45) Veröffentlichungstag und Bekanntmachung des Hinweises auf die Patenterteilung: **30.05.2018**
(21) Anmeldenummer: 10003456.0
(22) Anmeldetag: 30.03.2010
(51) Int. Cl.: C03C 17/245

(54) **Infrarot-Strahlung reflektierende Glas-oder Glaskeramikscheibe**
Glass or glass ceramic sheet which reflects infrared radiation
Plaque en verre ou vitrocéramique réfléchissant un rayonnement infrarouge

(30) Priorität: 31.03.2009 DE 102009017547
(43) Veröffentlichungstag der Anmeldung: 06.10.2010
(73) Patentinhaber: Schott AG, 55122 Mainz (DE)
(72) Erfinder: Henn, Christian, 55546 Frei-Laubersheim (DE); Luther, Veit, 65795 Hattersheim (DE); Hahn, Andreas, 55606 Hochstetten-Dhaun (DE); Schmidbauer, Wolfgang, Dr., 55126 Mainz (DE)
(74) Vertreter: Blumbach · Zinngrebe Patent- und Rechtsanwälte

(56) Entgegenhaltungen:
- US-A- 4 265 974
- US-A1- 2007 029 187
- US-B1- 6 416 890
- BISHT H ET AL: "Comparison of spray pyrolyzed FTO, ATO and ITO coatings for flat and bent glass substrates" THIN SOLID FILMS, ELSEVIER-SEQUOIA S.A. LAUSANNE, CH LNKD- DOI:10.1016/S0040-6090(99)00254-0, Bd. 351, Nr. 1-2, 30. August 1999 (1999-08-30), Seiten 109-114, XP004183076 ISSN: 0040-6090
- KOJIMA M ET AL: "Transparent furnace made of heat mirror" THIN SOLID FILMS, ELSEVIER-SEQUOIA S.A. LAUSANNE, CH LNKD- DOI:10.1016/S0040-6090(01)01056-2, Bd. 392, Nr. 2, 30. Juli 2001 (2001-07-30) , Seiten 349-354, XP004250765 ISSN: 0040-6090
- Werner Vogel: "Glass Chemistry", 1994, XP007919456, ISBN: 0-387-57572-3 * figure 7.12; table 10.1 *

## Beschreibung

### Gebiet der Erfindung

Die Erfindung betrifft ein Verfahren zur Herstellung einer Infrarot-Strahlung reflektierenden Glas- oder Glaskeramikscheibe. Insbesondere betrifft die Erfindung ein Verfahren zur Herstellung einer Vorsatzscheibe für einen Ofen oder einen Kamin, sowie einer Feuerschutzverglasung.

### Hintergrund der Erfindung

Infrarot-Strahlung reflektierende Scheiben, insbesondere Backofenscheiben oder Kaminsichtscheiben sind bekannt.
Es handelt sich dabei in der Regel um ein Substratglas aus Glas oder Glaskeramik, welches mit einer Beschichtung versehen ist, die im Infrarotbereich eine geringere Transmission aufweist als im Bereich des sichtbaren Lichtes. So kann der Verwender in das Innere des Ofens oder Kamins hineinschauen, wobei in dem Ofen beispielsweise durch ein Feuer entstehende Infrarot-Strahlung nur teilweise in die Umgebung emittiert wird.

Aufgrund der Infrarot-Strahlung reflektierenden Ausgestaltung wird dabei nicht nur die Aufheizung von Gegenständen in der Nähe des Ofens reduziert, sondern es kann auch eine Erwärmung der Scheibe und der Umgebung der Scheibe auf Temperaturen vermieden werden, welche beim Anfassen zu Verbrennungen führen könnten.

Herkömmliche Beschichtungen für Glaskeramikscheiben sind beispielsweise aus zinn-dotiertem Indiumoxid- aufgebaut. Weiter sind Aluminium-dotierte Zinkoxidschichten sowie Fluor- dotiere Zinnoxidschichten bekannt. Mit derartigen Beschichtungen lässt sich ein hoher Reflexionsgrad bei einer Wellenlänge bereits ab etwa 2000 nm erreichen.

Nachteilig an bekannten Infrarot-Strahlung reflektierenden Beschichtungen hat sich aber gezeigt, dass die Schichten bei hoher Hitzebelastung, insbesondere bei Temperaturen über 450°C ihre reflektierende Wirkung im Infrarotbereich teilweise dauerhaft verlieren.

So lassen sich mögliche Langzeit-Temperaturbelastungen von allenfalls 500°C erreichen. Als Scheibe für Feuerschutzanwendungen sind derartige Glaskeramikscheiben daher nicht optimal geeignet.

Des Weiteren werden bei der Herstellung einer Glaskeramik aus Grünglas im Keramisierungsprozess Temperaturen von etwa 900°C erreicht. Herkömmliche Infrarot-Strahlung reflektierende Schichten verlieren nach einer Erwärmung auf diese Temperatur weitgehend ihre Wirkung.

Das Aufbringen einer Infrarot-Strahlung reflektierenden Schicht nach dem Keramisierungsprozess ist aufwändiger, insbesondere können Glasscheiben, welche im Zuge des Keramisierungsprozesses verformt, insbesondere gebogen, und so auf die gewünschte Endform werden, nur sehr aufwändig mit einer gleichmäßigen Beschichtung versehen werden.

Das Dokument H. Bisht et al: "Comparisation of spray pyrolyzed FTO, ATO and ITO coatings for flant and bent glass substrates"; Thin Solid Films, vol. 351, 1999, p. 109-114 zeigt gesprühte ATO- und ITO-Schichten auf Glassubstraten.

Das Dokument M. Kojima et al.: "Transparent furnace made of heat mirror"; Thin Solid Films, vol. 392, 2001, p. 349-354, XP004250765 zeigt das Aufbringen einer Antimon dotierten Zinnoxidschicht auf ein Glassubstrat durch ein Sprühverfahren. Dabei werden teilorganische Precursor-Materialien verwendet.

Das Dokument US 2007/029187 A1 zeigt das Aufbringen von TCO-Schichten aus Antimon dotiertem Zinnoxid. Diesen werden amorph aufgebracht und sodann durch Tempern in eine kristalline Struktur umgewandelt.

### Aufgabe der Erfindung

Der Erfindung liegt demgegenüber die Aufgabe zugrunde, eine Infrarot-Strahlung reflektierende Glas- oder Glaskeramikscheibe bereitzustellen, bei welcher die genannten Nachteile des Standes der Technik zumindest reduziert sind.

Insbesondere soll eine Glas- oder Glaskeramikscheibe mit einer hohen Hitzebeständigkeit bereitgestellt werden.

Eine weitere Aufgabe der Erfindung ist es, eine einfach und kostengünstig herstellbare Glas- oder Glaskeramikscheibe bereitzustellen.

Schließlich ist es eine Aufgabe der Erfindung, eine Scheibe mit guter optischer Anmutung bereitzustellen.

### Zusammenfassung der Erfindung

Die Aufgabe der Erfindung wird bereits durch ein Verfahren zur Herstellung einer Infrarot-Strahlung reflektierenden Glas- oder Glaskeramikscheibe nach Anspruch 1 gelöst.

Bevorzugte Ausführungsformen und Weiterbildungen der Erfindung sind den Unteransprüchen zu entnehmen.

Die Erfindung betrifft die Herstellung einer Glas- oder Glaskeramikscheibe, insbesondere ausgebildet als Feuerschutzverglasung, als Vorsatzscheibe für einen Ofen oder Kamin oder als Ofenmuffel, welche eine Antimonoxid enthaltende Infrarot-Strahlung reflektierende Zinnoxidschicht umfasst.

Weiter umfasst die Glas- oder Glaskeramikscheibe gemäß der Erfindung ein Glas- oder Glaskeramiksubstrat mit einem thermischen Ausdehnungskoeffizienten von α von weniger als 4,2, bevorzugt weniger als 3,5 * 10⁻⁶ K⁻¹. Es werden also Gläser mit hoher Temperaturbeständigkeit oder Glaskeramiken verwendet.

Die antimondotierte Zinnoxidschicht ist als Einschicht-Reflexionsschicht ausgebildet. Unter einer Einschicht-Reflexionsschicht wird eine Schicht verstanden, die nicht aufgrund ihrer Ausgestaltung als optisches Wechselschichtsystem reflektiert. Vielmehr scheint eine Antimon-dotierte Zinnoxidschicht aufgrund ihrer kristallinen Eigenschaften der durch das Antimon verursachten Fehlstellen und der frei werdenden Elektronen durch die Dotierung als Einsatz für eine Reflexionswirkung im Infrarotbereich aufzuweisen.

Im sichtbaren Bereich ist die Schicht dagegen transparent, also durchlässig zumindest für einen Teil des sichtbaren Lichtes, so dass die Scheibe als Sichtscheibe verwendet werden kann.

Die Erfinder haben herausgefunden, dass Antimonoxiddotierte Zinnoxidschichten eine hohe Temperaturbeständigkeit bei gleichzeitig guter Reflexionswirkung im Infrarotbereich aufweisen.

Insbesondere haben die Erfinder herausgefunden, dass die Schichten von Anfang an, also bereits ohne thermische Nachbehandlung im sichtbaren Bereich transparent sind und gleichzeitig einen relativ hohen Reflexionsgrad im Infrarotbereich haben.

Insbesondere kann bereits bei einer Wellenlänge zwischen 3000 und 4000 nm ein Reflexionsgrad von mehr als 30, vorzugsweise mehr als 40 % erreicht werden, wobei der mittlere Transmissionsgrad im sichtbaren Bereich mehr als 40, vorzugsweise mehr als 50 und besonders bevorzugt mehr als 70 beträgt.

Die Erfinder haben weiter herausgefunden, dass sich bei einer derartigen Beschichtung nach dem Tempern bei Temperaturen bis zu 900°C die Infrarot-Strahlung reflektierende Wirkung nicht nur bestehen bleibt, sondern sich sogar verbessert.

Unter einer Zinnoxidschicht wird eine Schicht verstanden, welche überwiegend Zinnoxid enthält. Es versteht sich, dass die Beschichtung neben Antimonoxid noch weitere Bestandteile enthalten kann.

Weiter hat sich herausgestellt, dass die erfindungsgemäße Beschichtung zu einem rauchglasartigen, also grauen Aussehen führen kann und daher im Gegensatz zu farbigen Beschichtungen eine schöne optische Anmutung hat.

Bei einer Ausführungsform der Erfindung grenzt die Zinnoxidschicht direkt an das Glas oder Glaskeramiksubstrat an. Die Zinnoxidschicht ist somit direkt auf das Substrat aufgebracht. Die Erfinder haben herausgefunden, dass selbst beim direkten Aufbringen auf das gegebenenfalls vorgewärmte Substrat eine hinreichende Abriebbeständigkeit erreicht werden kann.

Bei einer alternativen Ausführungsform ist zwischen der Zinnoxidschicht und dem Glas- oder Glaskeramiksubstrat eine Haftvermittlerschicht angeordnet.

Diese Ausführungsform der Erfindung eignet sich besonders für das Abscheiden von Zinnoxidschichten vor einer thermischen Nachbehandlung des Glases, insbesondere vor einem nachfolgenden Keramisierungsprozess.

Als Haftvermittlerschicht eignen sich eine Vielzahl von Materialien, insbesondere Siliziumoxid oder Aluminiumoxid, sowie abgeschiedene weiche Schichten mit einem hohen Kohlenstoffanteil. Die Haftvermittlerschicht kann durch verschiedenartige Beschichtungsverfahren wie Flammporolyse, Walzen, Sprühen oder ein PVD- oder CVD-Verfahren aufgebracht werden.

Bei einer Weiterbildung der Erfindung wird auf die Zinnoxidschicht eine Entspiegelungsschicht aufgebracht, welche im sichtbaren Bereich eine Entspiegelungswirkung hat. Dabei kann es sich insbesondere um ein Interferenzsystem handeln. Diese Ausführungsform der Erfindung eignet sich insbesondere für Scheiben an Feuerschutztüren.

Vorzugsweise ist die Scheibe als Glaskeramikscheibe ausgebildet. Derartige Materialien lassen sich auch als sehr temperaturbeständiges Flachglas mit hoher mechanischer Belastbarkeit bereitstellen. Insbesondere kann ein derartiges Material als sogenanntes Null-Ausdehnungsmaterial bereitgestellt werden, bei welchem der thermische Längenausdehnungskoeffizient zwischen 20 und 700°C weniger als ± 0,8 * 10⁻⁶ K⁻¹ beträgt.

Das Verhältnis von Antimon zu Zinn in der Infrarot-Strahlung reflektierenden Zinnoxidschicht beträgt bei einer bevorzugten Ausführungsform der Erfindung zwischen 0,5 und 20, vorzugsweise zwischen 1 und 12 und besonders bevorzugt zwischen 2 und 6 % (ermittelt auf Gewichtsprozent-Basis).

Es hat sich insbesondere herausgestellt, dass in dem bevorzugtem Bereich eine besonders gute Reflexionswirkung bei gleichzeitig guter Transmission im sichtbaren Bereich erreicht werden kann.

Die Infrarot-Strahlung reflektierende Zinnoxidschicht wird gemäß der Erfindung durch Sputtern aufgebracht und hat bei einer bevorzugten Ausführungsform der Erfindung eine Dicke zwischen 20 und 2000 nm, vorzugsweise zwischen 200 und 1000 nm und besonders bevorzugt zwischen 600 und 700 nm.

Es versteht sich, dass die Schicht nicht zwingend einschichtig ausgebildet sein muss, sondern dass die Schicht auch Teil eines Mehrschichtsystems sein kann.

Die Plasmakante, welche das Reflexionsspektrum in zwei Bereiche aufteilt, kann bei den erfindungsgemäßen Schichten unter 3000, vorzugsweise unter 2500 und besonders bevorzugt unter 2000 nm liegen. Eine so ausgebildete Scheibe ist insbesondere als Vorsatzscheibe für Kamine geeignet, bei welchen die Glut typischerweise recht kurzwellige Strahlung mit einem Intensitätsmaximum bei etwa 2500 nm emittiert.

Die Erfindung betrifft ein Verfahren zur Herstellung einer Infrarot-Strahlung reflektierenden Glas- oder Glaskeramikscheibe, bei welchem ein Substrat, insbesondere ein Glassubstrat bereitgestellt wird und eine Antimonoxid enthaltene Zinnoxidschicht auf dem Substrat abgeschieden wird.

Als Substrat wird ein Glas- oder Glaskeramiksubstrat mit einem thermischen Ausdehnungskoeffizienten α von weniger als 4,2, bevorzugt von weniger als 3,5 verwendet.

Mit dem Verfahren wird eine kristalline Schicht aufgebracht, welche einen einheitlichen Farbeindruck aufweist.

Gemäß der Erfindung wird die Schicht mittels eines Sputter-Verfahrens, insbesondere mittels eines Magnetron-Sputterverfahrens abgeschieden. Mit derartigen Sputterverfahren lassen sich auch große Flächen kostengünstig beschichten.

Bei einer bevorzugten Ausführungsform der Erfindung wird ein Antimonoxid- und Zinnoxid-haltiges, insbesondere keramisch ausgebildetes Target verwendet.

Diese Ausführungsform der Erfindung hat den Vorteil, dass mittels eines Sputterverfahrens die Zusammensetzung des Targets auf das Substrat nahezu identisch übertragen werden kann. So muss zum einen nur ein Target verwendet werden. Des Weiteren ist bei Verwendung eines keramischen Targets die Zudosierung von Sauerstoff während des Sputterprozesses nicht zwingend erforderlich.

Es hat sich allerdings herausgestellt, dass es auch bei Verwendung eines keramischen Targets je nach gewünschten Schichteigenschaften vorteilhaft sein kann, beim Sputtern Sauerstoff zuzudosieren. So führt zwar ein höherer Sauerstoffanteil zu einer etwas geringeren Reflexionswirkung im Infrarotbereich. Gleichzeitig steigt aber die Transmission im sichtbaren Bereich im hohen Maße an.

Bei einer bevorzugten Ausführungsform der Erfindung wird die Antimonoxid enthaltende Zinnoxidschicht auf einem Grünglas (Glasrohling für einen Keramisierungsprozess) abgeschieden, welches nach dem Abscheiden der Schicht keramisiert wird.

Es hat sich herausgestellt, dass die erfindungsgemäße Zinnoxidschicht in einem Keramisierungsprozess auftretende Temperaturen von etwa 900°C verträgt, ohne ihre Infrarot-Strahlung reflektierende Wirkung zu verlieren.

So kann die Schicht vor dem Keramisieren aufgebracht werden und die Scheibe während des Keramisierungsprozesses im heißen Zustand verformt, insbesondere gebogen werden, wobei sie im Wesentlichen ihre Endform annimmt.

Bei einer bevorzugten Ausführungsform der Erfindung wird das Substrat nach dem Abscheiden der Antimonoxidenthaltenden Zinnoxidschicht auf mindestens 550°C, vorzugsweise auf mindestens 850°C erwärmt. Eine derartige Erwärmung kann, muss aber nicht im Zuge eines Keramisierungsprozesses erfolgen. Vielmehr hat sich gezeigt, dass die Infrarot-Strahlung reflektierende Wirkung beim Tempern sogar zunimmt.

Während des Abscheidens der Infrarot-Strahlung reflektierenden Zinnoxidschicht wird gemäß der Erfindung das Substrat auf einer Temperatur zwischen 150 und 600°C, bevorzugt zwischen 300 und 500°C gehalten.

Die Erwärmung des Substrates führt zum einen zur Entfernung von Wasser, insbesondere im oberflächennahen Bereich des Substrates. Zum anderen lässt sich durch eine Erwärmung des Substrates ein gleichmäßigeres Schichtwachstum erreichen.

Mit der Erfindung können Glas- oder Glaskeramikscheiben mit einer Dauereinsatztemperatur von mehr als 600, oder sogar mehr als 700°C bereitgestellt werden. Derartige Scheiben sind somit auch als Feuerschutzglas geeignet.

### Kurzbeschreibung der Zeichnungen

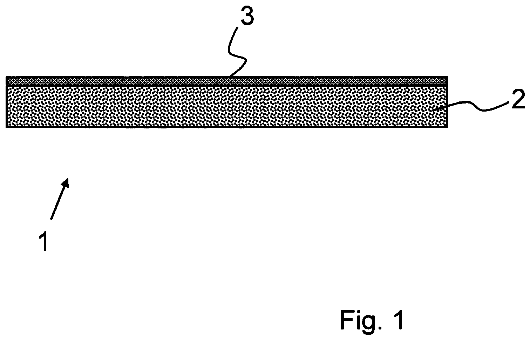

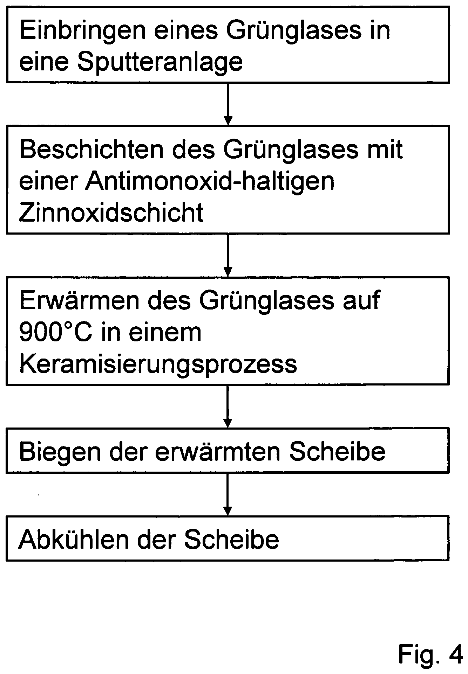

Die Erfindung soll im Folgenden Bezug nehmend auf die Zeichnungen Fig. 1 bis Fig. 4 näher erläutert werden.
Fig. 1 zeigt schematisch ein Ausführungsbeispiel einer Glas- oder Glaskeramikscheibe,
Fig. 2 und Fig. 3
   zeigen beispielhafte spektrale Reflexionverläufe
   von erfindungsgemäßen hergestellten Gläsern sowie bekannten
   Vergleichsgläsern,
Bezug nehmend auf Fig. 4 sollen die wesentlichen Verfahrensschritte eines Verfahrens zur Herstellung einer Glas- oder Glaskeramikscheibe näher erläutert werden.

### Detaillierte Beschreibung der Zeichnungen

Fig. 1 zeigt schematisch eine Glas- oder Glaskeramikscheibe 1, welche ein keramisches Substrat 2 umfasst. Das keramische Substrat 2 ist als Null-Ausdehnungsmterial ausgebildet. Auf das Substrat 2 ist eine Antimonoxidhaltige Zinnoxidschicht 3 abgeschieden. Das Verhältnis von Antimon zu Zinn beträgt bei dieser Ausführungsform der Erfindung etwa 6 %.

Fig. 2 zeigt den spektralen Reflexionsgrad verschiedener Ausführungsbeispiele der Erfindung.

Auf der X-Achse ist die Wellenlänge in nm aufgetragen, die Y-Achse gibt den Anteil der spektralen Reflexion wieder, ein Wert von 1 würde dabei die vollständige Reflexion der jeweiligen Wellenlänge bedeuten.

Sämtliche Kurven geben den spektralen Reflexionsgrad nach einem Keramisierungsprozess, also nach einer Temperaturbehandlung mit mehr als 700°C wieder.

Die Kurve 10 zeigt ein Ausführungsbeispiel mit einer 800 nm dicken Antimon-dotierten Zinnoxidschicht. Die Dicke der Schicht 11 beträgt 550 nm und die der Schicht 12 beträgt 500 nm. Zu erkennen ist, dass der spektrale Reflexionsgrad bei Wellenlängen über 2000 nm bei den dünneren Schichten wesentlich besser ist, als bei der dickeren Schicht.
Dies zeigt die prozesstechnischen Möglichkeiten.

Weiter ist zu erkennen, dass die Plasmakante aller drei Materialien bei unter 3000 nm liegt und dass der spektrale Reflexionsgrad im sichtbaren Bereich bei allen drei Schichten bei unter 0,2 liegt. Bereits bei einer Wellenlänge von etwa 2500 nm erreichen die beiden dünnen Schichten, welche in den Kurven 11 und 12 dargestellt werden, einen spektralen Reflexionsgrad von mehr als 0,3. Ab 3000 nm beträgt der spektrale Reflexionsgrad bei den Schichten gemäß Kurven 11 und 12 sogar mehr als 0,4.

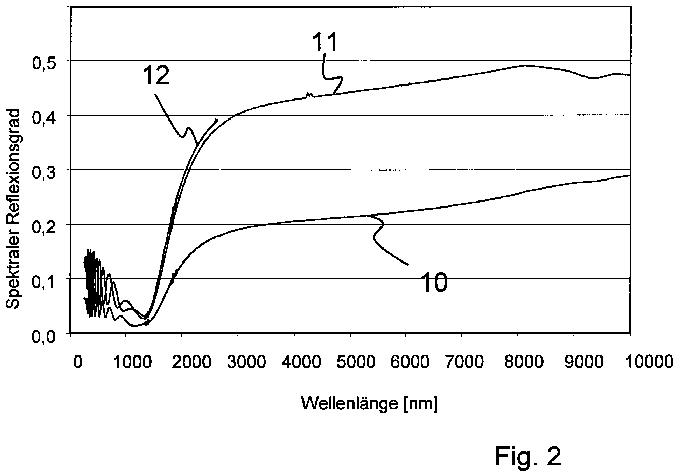

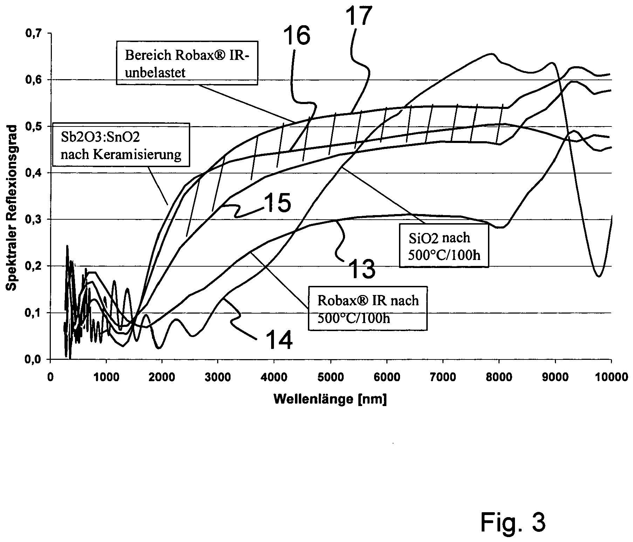

In Fig. 3 sind entsprechend der Fig. 2 die spektralen Reflexionsgrade verschiedener Glaskeramikscheiben aufgetragen. Dabei wurden auch aus dem Stand der Technik bekannte Glaskeramikscheiben untersucht.

Die Kurve 17 gibt den spektralen Reflexionsgrad einer IR reflektierenden Beschichtung auf Basis von fluordotiertem Zinnoxid wieder. Zu erkennen ist, dass die Plasmakante dieses Materials zwischen 2000 und 3000 nm liegt und dass die Beschichtung bereits ab 2500 nm zu einem hohen Reflexionsgrad führt.

Die Kurve 13 gibt den spektralen Reflexionsgrad dieser Beschichtung nach einer Belastung von 500°C für 100 Stunden wieder. Zu erkennen ist, dass der Reflexionsgrad für Wellenlängen zwischen 2000 und 5500 nm erheblich abgesunken ist und insbesondere in dem bei Vorsatzscheiben relevanten Wellenlängenbereich zwischen 2000 und 4000 nm bei unter 0,25 liegt. Das Glas ist somit für eine Dauerbelastung von 500°C nicht geeignet.

Die Kurve 14 zeigt ein weiteres mit einer Infrarot-Strahlung reflektierenden Beschichtung versehenes Glas ebenfalls nach einer Temperaturbehandlung von 500°C über 100 Stunden. Auch dieses Glas erreicht keine hinreichenden Reflexionswerte.

Die Kurven 15 und 16 zeigen den spektralen Reflexionsgrad von zwei verschiedenen Ausführungsbeispielen von Glaskeramikscheiben, welche mit einer Antimon-dotieren Zinnoxidschicht versehen sind nach einem Keramisierungsprozess. Zu erkennen ist, dass nahezu eine gleich gute Infrarot-Strahlung reflektierende Wirkung erzielt wird, wie bei dem Glas gemäß Kurve 17, welches keiner Temperaturbelastung ausgesetzt wurde. Insbesondere liegt die Plasmakante der Glaskeramikscheiben gemäß der Kurven 15 und 16 bei unter 3000 nm.

Bezug nehmend auf Fig. 4 sollen die wesentlichen Verfahrensschritte gemäß eines Ausführungsbeispiels der

Erfindung näher erläutert werden. Bei diesem Verfahren wird eine Glaskeramikscheibe hergestellt, welche insbesondere als Vorsatzscheibe für Kaminöfen verwendet werden kann.

Dazu wird zunächst ein sogenanntes Grünglas, also ein Ausgangsmaterial für einen Keramisierungsprozess in eine Sputteranlage eingebracht.

Das Grünglas wird vorzugsweise mittels eines Magnetron-Sputterverfahrens mit einer Antimonoxid-haltigen Zinnoxidschicht beschichtet.

Anschließend wird das Grünglas zur Herstellung einer Glaskeramik einem Keramisierungsprozess unterzogen und dabei auf bis zu 900°C erwärmt.

Während oder unmittelbar nach dem Keramisierungsprozess wird die erwärmte Scheibe verformt, um die gewünschte Endform zu erhalten.

Nach dem Abkühlen der Scheibe kann diese als äußerst temperaturbeständiges Glas mit Infrarot-Strahlung reflektierender Wirkung verwendet werden, insbesondere können Dauereinsatztemperaturen von 700°C garantiert werden.

## Patentansprüche

1. Verfahren zur Herstellung einer Infrarot-Strahlung reflektierenden Glas- oder Glaskeramikscheibe, umfassend die Schritte:
- Bereitstellen eines Substrats einem thermischen Ausdehnungskoeffizienten α von weniger als 4,2 * 10⁻⁶ K⁻¹,
- Abscheiden einer Antimonoxid enthaltenden und im sichtbaren Bereich transparenten Zinnoxidschicht auf dem Substrat, wobei die Zinnoxidschicht als kristalline Schicht mittels eines Sputter-Verfahrens abgeschieden wird, und wobei die Glas- oder Glaskeramikscheibe während des Abscheidens der Infrarot-Strahlung reflektierenden Zinnoxidschicht auf einer Temperatur zwischen 150 und 600 °C gehalten wird.

2. Verfahren zur Herstellung einer Infrarot-Strahlung reflektierenden Glas- oder Glaskeramikscheibe nach Anspruch 1, **dadurch gekennzeichnet, dass** die Antimonoxid enthaltende Zinnoxidschicht auf einem Grünglas abgeschieden wird, welches danach keramisiert wird.

3. Verfahren zur Herstellung einer Infrarot-Strahlung reflektierenden Glas- oder Glaskeramikscheibe nach dem vorstehenden Anspruch, **dadurch gekennzeichnet, dass** die Scheibe im heißen Zustand verformt, insbesondere gebogen wird.

4. Verfahren zur Herstellung einer Infrarot-Strahlung reflektierenden Glas- oder Glaskeramikscheibe nach einem der vorstehenden Ansprüche, **dadurch gekennzeichnet, dass** das Substrat nach dem Abscheiden der Antimonoxid enthaltenden Zinnoxidschicht auf mindestens 550°C, vorzugsweise mindestens 850 °C erwärmt wird.

5. Verfahren zur Herstellung einer Infrarot-Strahlung reflektierenden Glas- oder Glaskeramikscheibe nach einem der vorstehenden Ansprüche, **dadurch gekennzeichnet, dass** die Zinnoxidschicht direkt an das Glas- oder Glaskeramiksubstrat angrenzend aufgebracht wird.

6. Verfahren zur Herstellung einer Infrarot-Strahlung reflektierenden Glas- oder Glaskeramikscheibe nach einem der vorstehenden Ansprüche, **dadurch gekennzeichnet, dass** auf die Zinnoxidschicht eine Entspiegelungsschicht aufgebracht wird.

7. Verfahren zur Herstellung einer Infrarot-Strahlung reflektierenden Glas- oder Glaskeramikscheibe nach einem der vorstehenden Ansprüche, **dadurch gekennzeichnet, dass** die Infrarot-Strahlung reflektieren Zinnoxidschicht mit einer Dicke zwischen 20 und 2000 nm, vorzugsweise zwischen 200 und 1000 nm, besonders bevorzugt zwischen 600 und 700 nm aufgebracht wird.

8. Verfahren zur Herstellung einer Infrarot-Strahlung reflektierenden Glas- oder Glaskeramikscheibe nach einem der vorstehenden Ansprüche, wobei beim Sputtern Sauerstoff zudosiert wird.

## Claims

1. Method for producing an infrared radiation-reflecting glass or glass-ceramic pane, comprising the steps of:
- providing a substrate with a thermal expansion coefficient α of less than 4.2 * 10⁻⁶ K⁻¹,
- depositing a tin oxide layer, which contains antimony oxide and is transparent in the visible range, on the substrate, wherein the tin oxide layer is deposited as a crystalline layer by means of a sputtering process, and wherein the glass or glass-ceramic pane is kept at a temperature between 150 and 600°C during deposition of the infrared radiation-reflecting tin-oxide layer.

2. Method for producing an infrared radiation-reflecting glass or glass-ceramic pane as claimed in claim 1, **characterised in that** the antimony oxide-containing tin oxide layer is deposited on a green glass which is subsequently ceramized.

3. Method for producing an infrared radiation-reflecting glass or glass-ceramic pane as claimed in the preceding claim, **characterised in that** the pane is deformed, in particular is bent, in the hot state.

4. Method for producing an infrared radiation-reflecting glass or glass-ceramic pane as claimed in any one of the preceding claims, **characterised in that** the substrate is heated to at least 550°C, preferably at least 850°C, after deposition of the antimony oxide-containing tin oxide layer.

5. Method for producing an infrared radiation-reflecting glass or glass-ceramic pane as claimed in any one of the preceding claims, **characterised in that** the tin oxide layer is applied directly adjoining the glass or glass-ceramic substrate.

6. Method for producing an infrared radiation-reflecting glass or glass-ceramic pane as claimed in any one of the preceding claims, **characterised in that** an anti-reflection layer is applied to the tin oxide layer.

7. Method for producing an infrared radiation-reflecting glass or glass-ceramic pane as claimed in any one of the preceding claims, **characterised in that** the infrared radiation-reflecting tin oxide layer is applied with a thickness between 20 and 2000 nm, preferably between 200 and 1000 nm, particularly preferably between 600 and 700 nm.

8. Method for producing an infrared radiation-reflecting glass or glass-ceramic pane as claimed in any one of the preceding claims, wherein oxygen is added during sputtering.

## Revendications

1. Procédé de fabrication d'une plaque en verre ou vitrocéramique réfléchissant un rayonnement infrarouge, comprenant les étapes de :
- préparation d'un substrat ayant un coefficient de dilatation thermique α inférieur à 4,2 * 10⁻⁶ K⁻¹,
- dépôt d'une couche d'oxyde d'étain, transparente dans le domaine visible et contenant de l'oxyde d'antimoine sur le substrat, la couche d'oxyde d'étain étant déposée sous forme de couche cristalline au moyen d'un procédé de pulvérisation, et la plaque en verre ou vitrocéramique étant maintenue à une température comprise entre 150 et 600°C pendant le dépôt de la couche d'oxyde d'étain réfléchissant un rayonnement infrarouge.

2. Procédé de fabrication d'une plaque en verre ou vitrocéramique réfléchissant un rayonnement infrarouge selon la revendication 1, **caractérisé en ce que** la couche d'oxyde d'étain contenant l'oxyde d'antimoine est déposée sur un vert cru, lequel est ensuite céramisé.

3. Procédé de fabrication d'une plaque en verre ou vitrocéramique réfléchissant un rayonnement infrarouge selon la revendication précédente, **caractérisé en ce que** la plaque est déformée à l'état chaud, notamment fléchie.

4. Procédé de fabrication d'une plaque en verre ou vitrocéramique réfléchissant un rayonnement infrarouge selon l'une des revendications précédentes, **caractérisé en ce que** le substrat est réchauffé à au moins 550°C, de préférence au moins 850°C, après le dépôt de la couche d'oxyde d'étain contenant l'oxyde d'antimoine.

5. Procédé de fabrication d'une plaque en verre ou vitrocéramique réfléchissant un rayonnement infrarouge selon l'une des revendications précédentes, **caractérisé en ce que** la couche d'oxyde d'étain est déposée directement sur le substrat en verre ou vitrocéramique en position adjacente.

6. Procédé de fabrication d'une plaque en verre ou vitrocéramique réfléchissant un rayonnement infrarouge selon l'une des revendications précédentes, **caractérisé en ce qu'**une couche anti-reflet est déposée sur la couche d'oxyde d'étain.

7. Procédé de fabrication d'une plaque en verre ou vitrocéramique réfléchissant un rayonnement infrarouge selon l'une des revendications précédentes, **caractérisé en ce que** la couche d'oxyde d'étain réfléchissant un rayonnement infrarouge est déposée à une épaisseur comprise entre 20 et 2000 nm, de préférence entre 200 et 1000 nm, de manière particulièrement préférée entre 600 et 700 nm.

8. Procédé de fabrication d'une plaque en verre ou vitrocéramique réfléchissant un rayonnement infrarouge selon l'une des revendications précédentes, dans lequel de l'oxygène est ajouté de manière dosée lors de la pulvérisation.
